# EUROPEAN PATENT APPLICATION

(11) **EP 4 622 033 A1**
(43) Date of publication of application: **24.09.2025**
(21) Application number: 25160647.1
(22) Date of filing: 27.02.2025
(51) Int. Cl.: H02H 3/10, H02H 3/18, B60L 50/60, B60L 50/64, B60L 3/04, B60L 3/00, H02H 1/00, B60K 1/04

(54) **WORK VEHICLE**

(30) Priority: 21.03.2024 JP 2024044656
(71) Applicant: Yanmar Holdings Co., Ltd., Osaka-shi, Osaka (JP)
(72) Inventor: SHIMIZU, Hinoki, Okayama (JP)
(74) Representative: Novagraaf International SA

(57) **Abstract**

[Problem] The present invention aims at interrupting a battery circuit safely and easily.

[Solution] A work vehicle 1 comprises: a hood 7, a battery 14 arranged in the inner part of the hood 7; an earth terminal 5G; an earth wire 14G connecting the battery 14 and the earth terminal 5G; and a battery switch 20 provided in the earth wire 14G. A part of the earth wire 14G is wired to the outer part of the hood 7, and the battery switch 20 is provided in the part of the earth wire 14G which is wired to the outer part of the hood 7. A frame 5 is provided below the hood 7, and the earth terminal 5G and the battery switch 20 are provided on any one of left and right sides of the frame 5. The work vehicle 1 comprises: a hood base 6 provided between the hood 7 and the frame 5; and a coupling member 8 coupling the hood base 6 and the frame 5, wherein the battery switch 20 is attached to the coupling member 8.

## Description

### TECHNICAL FIELD

The present invention relates to a work vehicle.

### BACKGROUND ART

In a work vehicle comprising a battery (for example, Patent Document 1), a natural discharge from the battery may make the engine unable to start. To avoid the natural discharge, interrupting the battery circuit is needed.

### PRIOR ART DOCUMENT

### PATENT DOCUMENT

Patent Document 1: Japanese Patent Laid-Open No. H8-242611

### SUMMARY OF INVENTION

### TECHNICAL PROBLEM

However, work to disconnect a cable from the battery requires caution, and moreover, if the cable is erroneously disconnected from the plus terminal ahead of the minus terminal, a short circuit may be developed.

In view of the above circumstances, the present invention aims at interrupting the battery circuit safely and easily.

### SOLUTION TO PROBLEM

To solve the above problem, a work vehicle according to the present invention comprises: a hood; a battery arranged in the inner part of the hood; an earth terminal; an earth wire connecting the battery and the earth terminal; and a battery switch provided in the earth wire.

A part of the earth wire is wired to the outer part of the hood, and the battery switch may be provided in the part of the earth wire which is wired to the outer part of the hood.

A frame is provided below the hood, and the earth terminal and the battery switch may be provided on any one of left and right sides of the frame.

The work vehicle comprises: a hood base provided between the hood and the frame; and a coupling member coupling the hood base and the frame, and the battery switch may be attached to the coupling member.

The hood base has a protrusion region which protrudes sideward from the frame, and a through-hole through which the earth wire penetrates may be provided in the protrusion region.

The work vehicle comprises an axle, and the battery switch may be arranged between the battery and the axle in the front-rear direction.

The work vehicle comprises a wheel supported by the axle, and the battery switch may be arranged radially inward from the grounding surface of the wheel.

### ADVANTAGEOUS EFFECTS OF INVENTION

According to the present invention, the battery circuit may be interrupted safely and easily.

### BRIEF DESCRIPTION OF DRAWINGS

FIG. 1 is a right side view schematically illustrating a work vehicle according to an embodiment of the present invention.
FIG. 2 is a perspective view illustrating a frame according to an embodiment of the present invention.
FIG. 3 is a perspective view illustrating a hood base and its peripheral structure according to an embodiment of the present invention.
FIG. 4 is a perspective view illustrating the hood base and its peripheral structure according to an embodiment of the present invention.
FIG. 5 is a perspective view illustrating a coupling member and a battery switch according to an embodiment of the present invention.
FIG. 6 is a perspective view illustrating the coupling member according to an embodiment of the present invention.
FIG. 7 is a perspective view illustrating a conventional coupling member.
FIG. 8 is a side view illustrating the arrangement of the battery switch and an earth wire according to an embodiment of the present invention.

### DESCRIPTION OF EMBODIMENTS

In the following, a work vehicle 1 according to an embodiment of the present invention will be explained with reference to the drawings.

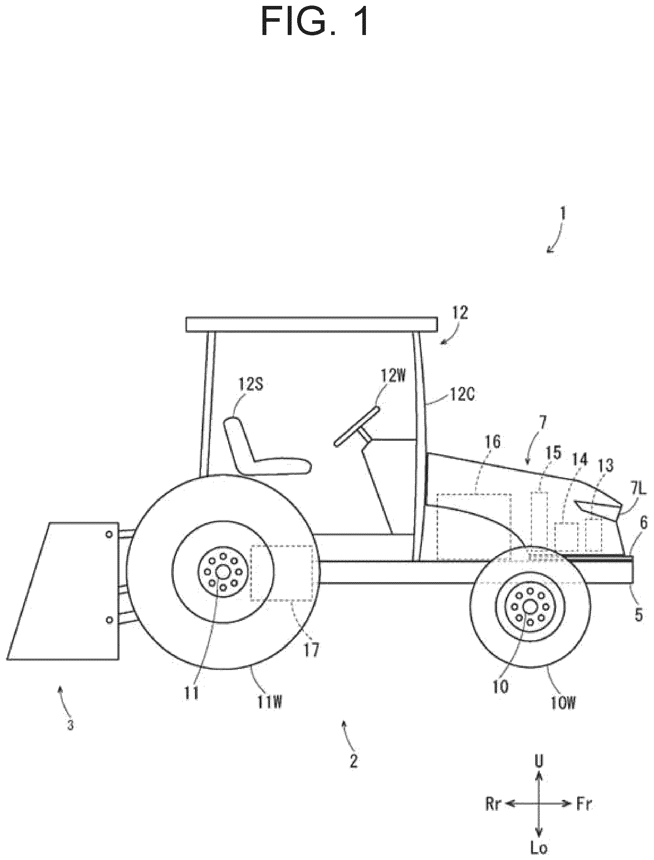

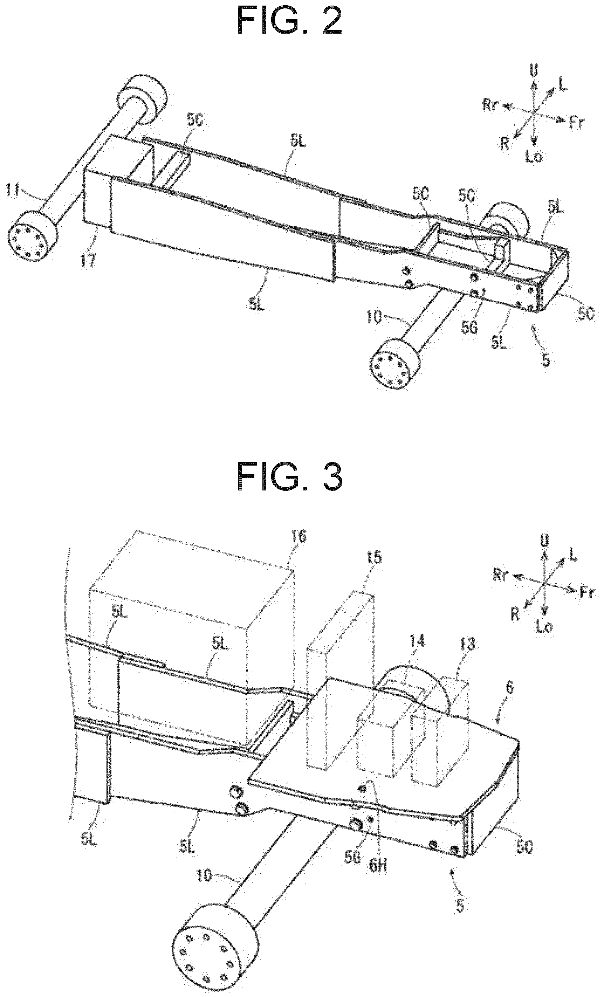

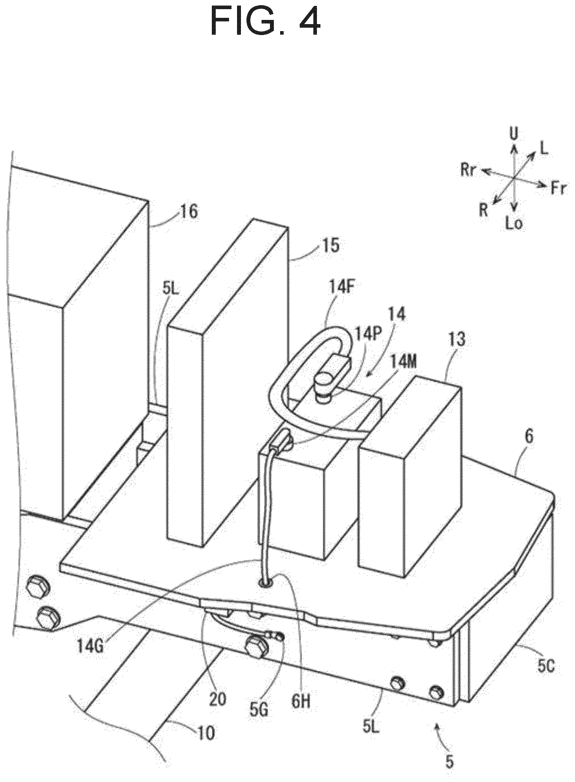

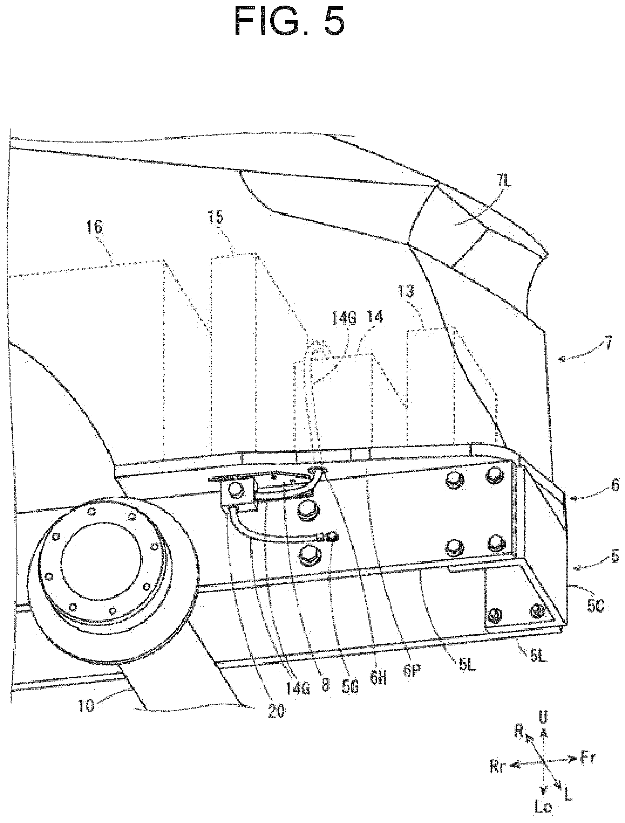

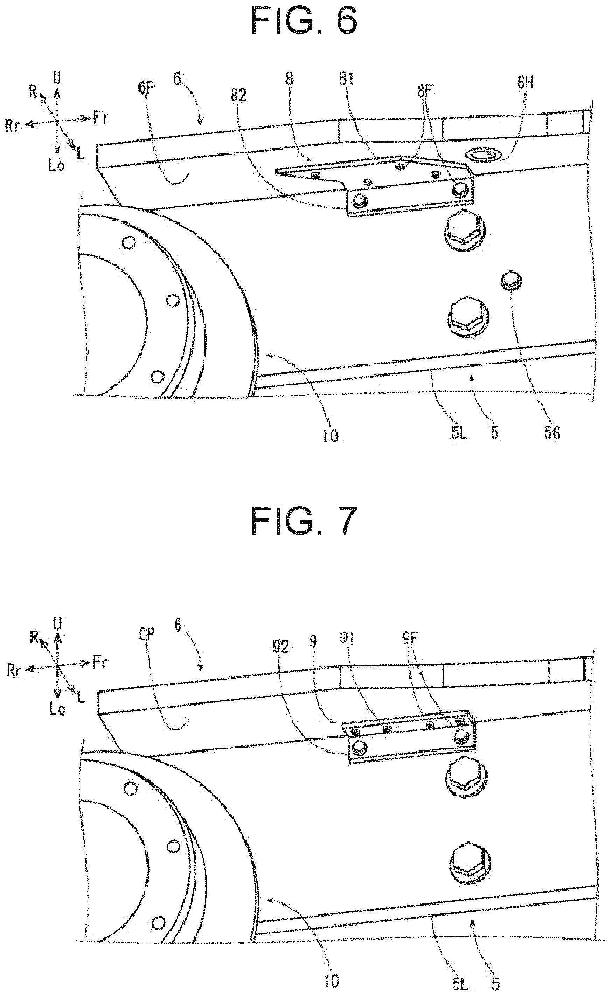

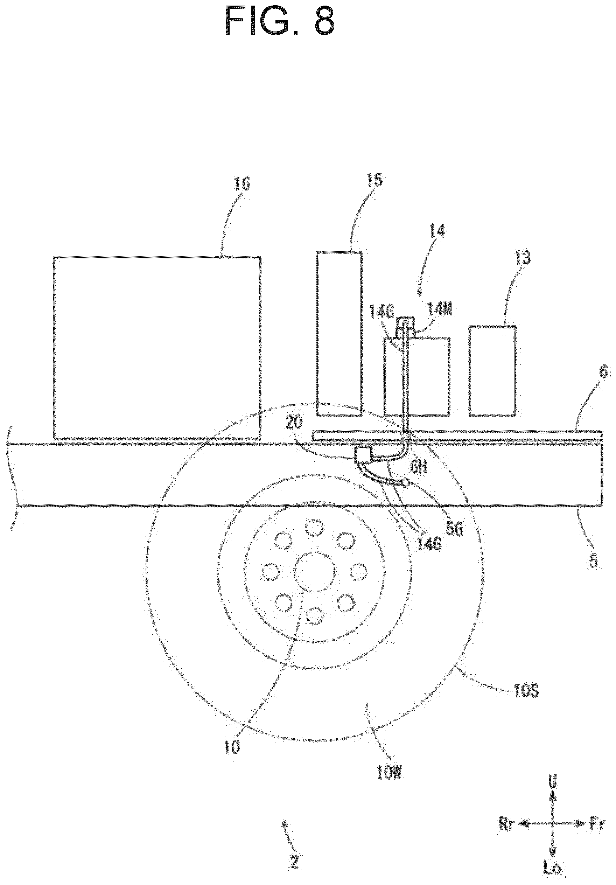

First, the overall structure of the work vehicle 1 will be explained. FIG. 1 is a right side view schematically illustrating the work vehicle 1. FIG. 2 is a perspective view illustrating a frame 5. FIGS. 3 and 4 are perspective views illustrating a hood base 6 and its peripheral structure. FIG. 5 is a perspective view illustrating a coupling member 8 and a battery switch 20. FIG. 6 is a perspective view illustrating the coupling member 8. FIG. 8 is a side view illustrating the arrangement of the battery switch 20 and an earth wire 14G. In each view, U, Lo, L, R, Fr and Rr respectively illustrate up, low, left, right, front and rear.

The work vehicle 1 comprises a carriage 2 and a work machine 3 provided in the rear of the carriage 2. The carriage 2 is a tractor, for example. The work machine 3 is a rotary cultivator, a harrow, a plow or the like, for example.

### [Carriage]

The carriage 2 (see FIG. 1) comprises the frame 5, a driving source 16, a transmission 17, a front axle 10 and a rear axle 11. The front axle 10 is suspended in the front part of the frame 5. The driving source 16 is an internal combustion engine which is fueled by light oil, for example, and is supported by the frame 5 on the further rear side than the front axle 10. The transmission 17 is supported by the rear end part of the frame 5. The rear axle 11 is arranged in the rear of the transmission 17 and is suspended via the transmission 17. A driver part 12 is provided in the rear of the driving source 16. In the driver part 12, a cabin 12C, a driver seat 12S and a steering wheel 12W and the like are provided.

### [Frame]

The frame 5 (see FIG. 2 or FIG. 5) is a rudder frame, for example. The frame 5 comprises left and right side members 5L and a plurality of coupling members 5C. The left and right side members 5L are plate-like members whose front-rear direction is defined as the longitudinal direction and whose left-right direction is defined as the thickness direction, and face each other left and right. In several places of the front-rear direction, the coupling members 5C coupling the left and right side members 5L are provided. The frame 5 has the shape of near left-right symmetry as a whole. Meanwhile, the above structure of the frame 5 is an example only, and the frame 5 may be of any type.

### [Hood base]

On the further front side than the driving source 16, the plate-like hood base 6 (see FIG. 3 or 6) is provided. The hood base 6 is arranged between a hood 7 and the frame 5, fixed to the frame 5 and closes the lower part of the hood 7. When viewed from above and as a whole, the hood base 6 has the shape of trapezoid whose rear width is wider than the front width and has the shape of near left-right symmetry. The width of the hood base 6 in left-right direction is wider than that of the frame 5 throughout the entire region. The hood base 6 has a protrusion region 6P which protrudes sideward from the frame 5 left and right (see FIGS. 5 and 6).

On the upper surface of the hood base 6, a radiator 15, a battery 14 and an ECU 13 (Electronic Control Unit) are arranged in the order from the rear side (side from the driving source 16). The radiator 15 is generally arranged above the front axle 10. The battery 14 and the ECU 13 are arranged on the further front side than the front axle 10. In the right protrusion region 6P of the hood base 6, a through-hole 6H which penetrates in the up-down direction (see FIG. 4) is provided. The through-hole 6H is provided on the right of the battery 14.

### [Coupling member]

The hood base 6 is coupled to the frame 5 by using the coupling members 8. The coupling members 8 are provided on the left and right of the frame 5. In the present embodiment, because the battery switch 20 described later is attached to the right coupling member 8, the right coupling member 8 will be explained.

The coupling member 8 is arranged on the further rear side than the through-hole 6H. The coupling member 8 has a plate-like first facing part 81 which faces the undersurface of the right protrusion region 6P of the hood base 6, and a plate-like second facing part 82 which faces the right surface of the right side member 5L of the frame 5. The first facing part 81 and the second facing part 82 are integral. The first facing part 81 is fastened to the right protrusion region 6P of the hood base 6 by using fasteners 8F. The second facing part 82 is fastened to the right side member 5L of the frame 5 by using the fasteners 8F. The fasteners 8F may be bolts, nuts, rivets and the like; however, weld bolts and weld nuts are desired.

### [Hood]

The hood 7 covers the driving source 16, the radiator 15, the battery 14 and the ECU 13. The lower end part located on the further front side than the driving source 16 of the hood 7 reaches the edge part of the upper surface of the hood base 6. In other words, the hood 7 covers the driving source 16 and most of the entire upper region of the hood base 6. On the front end part of the the hood 7, a headlight 7L is provided.

### [Battery, earth terminal and earth wire]

The battery 14 is formed in a rectangular parallelepiped shape. The battery 14 comprises a plus terminal 14P and a minus terminal 14M. The plus terminal 14P is provided in the the left portion of the upper surface of the battery 14. The minus terminal 14M is provided in the right portion of the upper surface of the battery 14. The battery 14 is arranged in the near center of the left-right direction of the hood base 6. Because of this, the plus terminal 14P is located leftward from the center of the left-right direction of the hood base 6, and the minus terminal 14M is located rightward from the center of the left-right direction of the hood base 6.

The plus terminal 14P and the ECU 13 are connected by a feeder 14F. On the right surface of the right side member 5L of the frame 5, an earth terminal 5G is provided. The minus terminal 14M and the earth terminal 5G are connected by the earth wire 14G. Power is supplied to electrical equipment (illustration omitted) such as a fuel pump, an injector, lighting and an air-conditioner from the plus terminal 14P of the battery 14 via the feeder 14F and the ECU 13. The earth wire 14G is wired through the through-hole 6H. Of the earth wire 14G, the upward portion from the hood base 6 is wired to the inner part of the hood 7. Of the earth wire 14G, the downward portion from the hood base 6 is wired to the right of the right side member 5L of the frame 5. That is to say, a part of the earth wire 14G is wired to the outer part of the hood 7.

### [Battery switch]

The battery switch 20 is provided in the downward portion from the hood base 6 of the earth wire 14G; or put it another way, it is provided in a part of the earth wire 14G which is wired to the outer part of the hood 7. The battery switch 20 interrupts the current flowing through the earth wire 14G. The battery switch 20 may be of any type such as push, lever and dial types. The battery switch 20 is attached to the first facing part 81 of the coupling member 8.

In order to reduce earth resistance of the earth wire 14G, shortening of the earth wire 14G is effective. For example, when the positions of the minus terminal 14M, the through-hole 6H, the battery switch 20 and the earth terminal 5G are aligned in the front-rear direction, the length of the earth wire 14G can be maximally shortened. However, in a case where the battery switch 20 is arranged in the vicinity of a grounding surface 10S (see FIG. 8) of a front wheel 10W, mud and water may adhere to the battery switch 20 due to mud and water splashed from the grounding surface 10S of the rotating front wheel 10W. Therefore, in the present embodiment, the battery switch 20 is arranged between the battery 14 and the front axle 10 in the front-rear direction. According to this arrangement, the battery switch 20 can be spaced from the grounding surface 10S of the front wheel 10W so that the adhesion of mud and water to the battery switch 20 can be reduced.

**In** addition, as mud and water are splashed mainly by centrifugal force, a possibility that mud and water adhere to the battery switch 20 is increased when the battery switch 20 is arranged radially outward from the grounding surface 10S of the front wheel 10W. For this reason, in the present embodiment, the battery switch 20 is arranged radially inward from the grounding surface 10S of the front wheel 10W. According to this arrangement, the adhesion of mud and water to the battery switch 20 can be reduced further.

Moreover, in the present embodiment, while the battery switch 20 is provided in the frame 5, the frame 5 is provided axially inward from the left and right front wheels 10W. Because mud and water are splashed mainly by centrifugal force, they are less prone to splash in the axial direction and therefore are less prone to adhere to the battery switch 20.

Further, in a case that the the work vehicle 1 turns left, for example, mud and water may be splashed from the right front wheel 10W to the side of the hood 7; however, in that case, splashed mud and water mainly adhere to the right surface of the hood 7 and therefore they are less prone to adhere to the battery switch 20 provided below the hood base 6.

FIG. 7 is a perspective view illustrating a conventional coupling member 9 in which the battery switch 20 is not provided. The coupling member 9 has a plate-like first facing part 91 which faces the undersurface of the right protrusion region 6P of the hood base 6 and a plate-like second facing part 92 which faces the right surface of the right side member 5L of the frame 5. The first facing part 91 and the second facing part 92 are integral. The first facing part 91 is fastened to the right protrusion region 6P of the hood base 6 by using fasteners 9F. The second facing part 92 is fastened to the right side member 5L of the frame 5 by using the fasteners 9F. The fasteners 9F may be bolts, nuts and rivets; however, weld bolts and weld nuts are desired.

As shown in FIG. 6 and FIG. 7, in order to attach the battery switch 20, the area of the first facing part 81 of the coupling member 8 according to this embodiment is enlarged as compared with that of the first facing part 91 of the conventional coupling member 9. According to this arrangement, providing a dedicated member for attaching the battery switch 20 is not required, allowing the battery switch 20 to be attached without an increase in parts. Meanwhile, the coupling member 8 may be arranged so that the battery switch 20 is attached to the second facing part 82 by enlarging the area of the second facing part 82 more than that of the second facing part 92.

According to the work vehicle 1 according to this embodiment described above, it comprises the hood 7, the battery 14 arranged in the inner part of the hood 7, the earth terminal 5G, the earth wire 14G connecting the battery 14 and the earth terminal 5G, and the battery switch 20 provided in the earth wire 14G. According to this arrangement, the circuit can be interrupted even if the cable (earth wire 14G) is not disconnected from the battery 14. Moreover, a short circuit can be prevented by disconnecting the cable (feeder 14F) from the plus terminal 14P ahead of the minus terminal 14M. For that reason, according to this arrangement, the circuit of the battery 14 can be interrupted safely and easily.

In addition, according to the work vehicle 1 according to this embodiment, a part of the earth wire 14G is wired to the outer part of the hood 7, and the battery switch 20 is provided in the part of the earth wire 14G which is wired to the outer part of the hood 7. According to this arrangement, the battery switch 20 can be operated without opening the hood 7.

Further, according to the work vehicle 1 according to this embodiment, the frame 5 is provided below the hood 7, and the earth terminal 5G and the battery switch 20 are provided on one side of left and right sides of the frame 5 (in the present embodiment, on the right). The frame 5 is not covered by the hood 7, and its left and right side surfaces are exposed. Moreover, between the frame 5 and the left and right front wheels 10W, a clearance is provided to steer the front wheel 10W. In short, on the left and right of the frame 5, space for the worker to insert his/her hand to work is secured. As a result, according to this arrangement, the worker can easily reach out his/her hand to the battery switch 20.

Further, according to the work vehicle 1 according to this embodiment, it comprises the hood base 6 provided between the hood 7 and the frame 5, and the coupling member 8 coupling the hood base 6 and the frame 5, the battery switch 20 being attached to the coupling member 8. According to this arrangement, the battery switch 20 can be attached without an increase in parts.

In addition, according to the work vehicle 1 according to this embodiment, the hood base 6 has the protrusion region 6P which protrudes sideward from the frame 5, and the through-hole 6H through which the earth wire 14G penetrates is provided in the protrusion region 6P. According to this arrangement, the earth wire 14G can be shortened as compared with a case that the earth wire 14G is wired along the surface of the hood base 6, allowing earth resistance to be reduced accordingly.

Also, according to the work vehicle 1 according to this embodiment, it comprises the axle (in the present embodiment, the front axle 10), and the battery switch 20 is arranged between the battery 14 and the front axle 10 in the front-rear direction. According to this arrangement, as the battery switch 20 can be spaced from the grounding surface 10S of the front wheel 10W, the adhesion of mud and water to the battery switch 20 can be reduced.

Further, according to the work vehicle 1 according to this embodiment, it comprises the wheel supported by the axle (in the present embodiment, the front wheel 10W supported by the front axle 10), and the battery switch 20 is arranged radially inward from the grounding surface of the wheel (in the present embodiment, the grounding surface 10S of the front wheel 10W). According to this arrangement, the adhesion of mud and water to the battery switch 20 can be reduced further.

The above embodiment may be modified as follows.

While in the above embodiment, the battery 14 is arranged frontward from the front axle 10, the battery 14 may be arranged rearward from the front axle 10. Also in this case, when the battery switch 20 is arranged between the battery 14 and the front axle 10 in the front-rear direction, the adhesion of mud and water to the battery switch 20 can be reduced.

Meanwhile, in a case where the battery 14 is arranged above the front axle 10, the battery switch 20 may be arranged above the front axle 10; however, when this makes the worker reaching his/her hand to the battery switch 20 difficult, the position of the battery switch 20 may be displaced forward or rearward from the front axle 10.

In the above embodiment, while the right coupling member 8 to which the battery switch 20 is attached has been explained, the left coupling member 8 may have such a shape that the right coupling member 8 is inverted in the left-right direction, or it may have the shape similar to that of the conventional coupling member 9.

In the above embodiment, an example that the earth wire 14G, the battery switch 20, the earth terminal 5G and the through-hole 6H are arranged on the right of the battery 14 and the frame 5 has been shown. The reason why such an arrangement was adopted is because the minus terminal 14M of the battery 14 is located rightward from the center of the left-right direction of the hood base 6 so that in a case where the earth wire 14G, the battery switch 20, the earth terminal 5G and the through-hole 6H are arranged right, the earth wire 14G can be reduced further. On the contrary, in a case where the minus terminal 14M is located leftward from the center of the left-right direction of the hood base 6, the earth wire 14G can be reduced further when the earth wire 14G, the battery switch 20, the earth terminal 5G and the through-hole 6H are arranged left. In this case, the coupling member 8 which is given in the above embodiment and which has the shape that the right coupling member 8 is inverted in the left-right direction is fastened to the left side member 5L of the frame 5 and the left protrusion region 6P of the hood base 6, and is used for attaching the battery switch 20.

Although in the above embodiment, an example that the present invention is applied to a tractor has been shown, the present invention may be applied to a rice transplanter and the like.

Although in the above embodiment, an example that the driving source 16 is the internal combustion engine has been shown, the driving source 16 may be an electric motor. Also, although in the above embodiment, an example that the battery 14 supplies power to electrical equipment such as the fuel pump, the injector, the lighting and the air-conditioner via the ECU 13 has been shown, when the driving source 16 is an electric motor, the battery 14 may supply power to the driving source 16.

Although in the above embodiment, an example that the work vehicle 1 comprises the front wheel 10W and a rear wheel 11W has been shown, the work vehicle 1 may comprise a crawler instead of the rear wheel 11W.

Although in the above embodiment, an example that the battery 14 is arranged on the side of the front axle 10 has been shown, the present invention may be applied to the work vehicle in which the battery 14 is arranged on the side of the rear axle 11.

### REFERENCE SIGNS LIST

1 work vehicle
5 frame
5G earth terminal
6 hood base
6H through-hole
6P protrusion region
8 coupling member
7 hood
10 front axle (axle)
10W front wheel (wheel)
10S grounding surface
14 battery
14G earth wire
20 battery switch

## Claims

1. A work vehicle comprising: a hood;
a battery arranged in an inner part of the hood;
an earth terminal;
an earth wire connecting the battery and the earth terminal; and
a battery switch provided in the earth wire.

2. The work vehicle according to claim 1, wherein a part of the earth wire is wired to an outer part of the hood, and
the battery switch is provided in the part of the earth wire which is wired to the outer part of the hood.

3. The work vehicle according to claim 2, wherein a frame is provided below the hood, and
the earth terminal and the battery switch are provided on any one of left and right sides of the frame.

4. The work vehicle according to claim 3, comprising: a hood base provided between the hood and the frame; and
a coupling member coupling the hood base and the frame, wherein the battery switch is attached to the coupling member.

5. The work vehicle according to claim 4, wherein the hood base has a protrusion region which protrudes sideward from the frame, and
a through-hole through which the earth wire penetrates is provided in the protrusion region.

6. The work vehicle according to any one of claims 1 to 5, comprising: an axle,
wherein the battery switch is arranged between the battery and the axle in the front-rear direction.

7. The work vehicle according to claim 6, comprising a wheel supported by the axle,
wherein the battery switch is arranged radially inward from a grounding surface of the wheel.
